# EUROPÄISCHE PATENTSCHRIFT

(11) **EP 2 489 914 B1**
(45) Veröffentlichungstag und Bekanntmachung des Hinweises auf die Patenterteilung: **25.11.2015**
(21) Anmeldenummer: 12001089.7
(22) Anmeldetag: 17.02.2012
(51) Int. Cl.: F16L 25/00, F23L 3/00, F23L 13/02, F24F 13/14, F16K 1/22, F16L 5/12

(54) **Zuluft-Wanddurchführung**
Air feed wall bushing
Traversée de mur pour arrivée d'air

(30) Priorität: 18.02.2011 DE 102011011772
(43) Veröffentlichungstag der Anmeldung: 22.08.2012
(73) Patentinhaber: CB-tec GmbH, 87789 Woringen (DE)
(72) Erfinder: Gegler, Constanze, 87740 Buxheim (DE)
(74) Vertreter: Meyer, Thorsten

(56) Entgegenhaltungen:
- EP-A1- 2 031 319
- EP-A2- 0 780 642
- AT-U1- 7 509
- DE-A1- 3 207 632
- DE-U1-202006 006 327
- GB-A- 1 185 367
- US-A- 5 238 220

## Beschreibung

Die Erfindung betrifft eine Zuluft-Wanddurchführung, mit einem Kanal mit einem Außenseiten-Ende und einem Innenseiten-Ende zum Einbau in einer zu durchführenden Wand mit einer Außenseite und einer Innenseite.

Moderne Häuser sind wegen der möglicht hohen Energieeffizienz inzwischen so Luftdicht konzipiert, dass es bei der Luftzuführung von außen zu Problemen kommt, da die Dichtigkeit des Hauses ein Luftaustausch gerade zur Energieeinsparung unterbindet.

Daher sind Be- und Entlüftungszugänge durch das Mauerwerk notwendig, um beispielsweise im innern des Hauses liegende Feuerstellen oder Abluftanlagen mit Frischluft zu versorgen.

Eine ein Rohr bildende Wanddurchführung, die die Merkmalen des Oberbegriffs des Anspruchs 1 offenbart, ist aus der AT 07 509 U1 bekannt. Dabei sind an den Enden liegende Abschnitte gegeneinander mit einem Ring aus wärmeisolierendem Werkstoff getrennt.

Aus der AT 500 632 A1 ist ein Be- und Entlüftungssystem mit einem Rohr mit darin angeordneter selbsttätig über eine Schmelzlötstelle auszulösender Verschlussklappe bekannt.

Kaminöfen im Wohnbereich werden immer beliebter. Der Durchzug der Kaminöfen braucht dabei einen entsprechenden Frischluftzugang für den Verbrennungsvorgang, der durch den Kamin hernach fortgeführt wird.

Daher können Kaminöfen mit einer Wanddurchführung mit der Außenluft verbunden werden. Diese sind meist im Innenbereich durch eine Klappe verschließbar, wenn der Kaminofen nicht in Betrieb ist.

Durch die durch die Wand reichenden Einrichtungen kommt es jedoch an den im Innern liegenden Teilen der Wanddurchführung zu Kondensationsbildung, da durch die Wanddurchführung die Kälte nach innen geleitet wird. Hierdurch können Schäden und ungewollte Nässe im Innenraum auftreten.

Eine solche nachteilige Anordnung ist aus der EP 0 780 642 A2 bekannt. Dabei ist eine Klappe in einem Kanal vorgeschlagen die durch eine Betätigungsvorrichtung schließbar ist, wobei eine Kondensatbildung nicht verhindert ist.

Aufgabe der Erfindung ist es eine verbesserte Zuluft-Wanddurchführung zur Verfügung zu stellen, bei der Kondensationsbildung möglichst verhindert wird.

Diese Aufgabe wird durch eine Zuluft-Wanddurchführung nach den Merkmalen des Anspruchs 1 gelöst.

Erfindungsgemäß ist eine Zuluft-Wanddurchführung, mit einem Kanal mit einem Außenseiten-Ende und einem Innenseiten-Ende zum Einbau in einer zu durchführenden Wand mit einer Außenseite und einer Innenseite, wobei der Kanal wenigstens teilweise durch einen Innenseiten-Ende-Abschnitt, einen Mittel-Abschnitt und einen Außenseiten-Ende-Abschnitt der Zuluft-Wanddurchführung gebildet ist, wobei der Mittel-Abschnitt eine thermische Entkopplung des Außenseiten-Ende-Abschnitts und des Innenseiten-Ende-Abschnitts bewirkt vorgesehen, die sich dadurch auszeichnet, dass im Außenseiten-Ende-Abschnitt wenigstens eine Klappe oder Lamelle vorgesehen ist, vermittels welcher der Kanal für die Zuluft verschlossen werden kann, und dass im oder am Innenseiten-Ende-Abschnitt die wenigstens eine Klappe oder Lamelle betätigende Betätigungsvorrichtung angeordnet ist, wobei die Betätigungsvorrichtung mit der/n Klappe/n oder Lamelle/n innerhalb des Kanals mechanisch gekoppelt ist. Hierdurch ist auf besonders effektive Weise die Kaltluft von den den Innenraum betreffenden Teilen abgehalten, wodurch diese nicht in dem Maße auskühlen können, dass es im Innenraum zu Kondensation an diesen Teilen kommen kann.

Der Erfindung folgend kann die Betätigungsvorrichtung dabei zur manuellen Bedienung als Hebel oder Griff ausgestaltet sein, oder mit einen motorischen Antrieb zur Betätigung gekoppelt sein.

Der Kanal kann im Sinne der Erfindung einen runden, eckigen oder den Gegebenheiten der Anwendung angepassten Querschnitt haben.

Vorteilhafterweise erfolgt dass die mechanische Kopplung durch ein hierzu innerhalb des Kanals vorgesehenes durch den Mittel-Abschnitt reichendes Gestänge erfolgt.

Eine besonders vorteilhafte Weiterbildung der Erfindung sieht vor, dass im Außenseiten-Ende-Abschnitt zwei Klappen im Zuluft-Weg hintereinander angeordnet vorgesehen sind. Die verbessert die Abdichtung erheblich und es entsteht ein dämmendes Luftpolster zwischen den beiden Klappen.

Bevorzugterweise sind die zwei Klappen dabei miteinander mechanisch parallel gekoppelt.

Bevorzugterweise ist der Mittel-Abschnitt aus einem Material, insbesondere Kunststoff, hergestellt, das schlechter Wärme leitend ist, als die angrenzenden Materialien, aus denen die Außenseiten-Ende- und Innenseiten-Ende-Abschnitte hergestellt sind. Hierdurch können die Beiden angrenzenden Abschnitte aus Metall hergestellt werden.

Bevorzugterweise ist anschließend an den Kanal bildenden Bereich des Innenseiten-Ende-Abschnitts ein Rohr-Ansatzstück vorgesehen, der über den einzumauernden Teil des Innenseiten-Ende-Abschnitts hinausragt. Die ermöglicht optimal den Anschluss eines Zuluft-Ofenrohres.

Von Vorteil ragt die Betätigungsvorrichtung durch die Außenseite des Rohr-Ansatzstücks hindurch.

Vorteilhafterweise ist/sind die Klappe/n an einer an dem Außenseiten-Ende-Abschnitt des Kanals gelagerten Schwenkachse verschwenkbar.

Bevorzugterweise ist das Gestänge symmetrisch ausgebildet und an zwei beabstandet zur Schwenkachse der Klappen an der Klappe befindlichen Punkten ansetzt.

Eine bevorzugter Weiterbildung der Erfindung sieht vor, dass das Gestänge über eine im Kanal angeordnete Achse betätigt wird und die Achse mit der Betätigungsvorrichtung mechanisch gekoppelt ist.

Dem folgend ist nach einer weiteren Ausgestaltung der Erfindung vorgesehen, dass die Achse wenigstens an einem Ende an der Innenseite der Wandung des Innenseiten-Ende-Abschnitts über eine Achslagerung befestigt ist.

Nach einer vorteilhafter Weiterbildung ist vorgesehen, dass die Klappe/n an ihrer/m der Wand des Kanals zugewandeten Ende eine elastische Dichtung angeformt hat/haben. Hierdurch dichten diese sehr gut gegen die Wand des Kanals ab.

Eine optimale Anpassung an verschiedene Wandstärken erfolgt von Vorteil dadurch, dass sich an den Außenseiten-Ende-Abschnitt eine Kanalverlängerung anschließt, die insbesondere mit einem Gitteraufsatz abschließt. Die Verlängerung kann dabei auch über den Wanddruchbruch hinaus ragen.

Weitere vorteilhafte Ausgestaltungen ergeben sich aus den weiteren Unteransprüchen oder deren mögliche Unterkombinationen.

Nachfolgend wird die Erfindung anhand der Zeichnungen weiter erläutert. Im Einzelnen zeigt die schematische Darstellung in:
- Fig. 1: eine schematische Darstellung von schräg oben auf eine erfindungsgemäßen Zuluft-Wanddurchführung in einer Teil-Schnittdarstellung mit geschlossenen Klappen,
- Fig. 2: die Zuluft-Wanddurchführung aus Fig. 1 mit geöffneten Klappen,
- Fig. 3: die Zuluft-Wanddurchführung aus Fig. 1 mit geschlossenen in einer Seitenansicht,
- Fig. 4: die Zuluft-Wanddurchführung aus Fig. 3 mit in einer Seitenansicht in Kanal-Richtung von Außenseite her gesehen,
- Fig. 5: die Zuluft-Wanddurchführung aus Fig. 3 in einer Draufsicht,
- Fig. 6: die Zuluft-Wanddurchführung aus Fig. 3 in einer Ansicht von schräg oben,
- Fig. 7: die Zuluft-Wanddurchführung aus Fig. 2 mit geschlossenen in einer Seitenansicht,
- Fig. 8: die Zuluft-Wanddurchführung aus Fig. 7 mit in einer Seitenansicht in Kanal-Richtung von Außenseite her gesehen,
- Fig. 9: die Zuluft-Wanddurchführung aus Fig. 7 in einer Draufsicht,
- Fig. 10: die Zuluft-Wanddurchführung aus Fig. 7 in einer Ansicht von schräg oben,
- Fig. 11: die erfindungsgemäße Zuluft-Wanddurchführung wobei der Kanal mit einer Kanalverlängerung mit sich daran anschließendem Gitteraufsatz verlängert ist,
- Fig. 12: die Zuluft-Wanddurchführung mit Kanalverlängerung und Gitteraufsatz aus Fig. 11 in einer zerlegten Darstellung,
- Fig. 13 bis 15: eine erfindungsgemäße Zuluft-Wanddurchführung mit Kanalverlängerung und Gitteraufsatz im eingebauten Zustand in einer Wand in schematischen Schnittdarstellungen in drei verschiedenen Ansichten,
- Fig. 16 und 17: die Zuluft-Wanddurchführung aus Fig. 13 mit an dem Aufschiebestück des Rohr-Ansatzstück angeschlossenen Zuluft-Ofenrohr, das mit einem Kaminofen verbunden ist und ohne Zuluft-Ofenrohr, und
- Fig. 18: eine Variante der Lagerung der mit dem Gestänge verbundenen Achse, wobei diese mit eine Achslagerung innerhalb des Innenseiten-Ende-Abschnitts des Kanals versehen ist, sodass die Wandung des unteren Bereichs Innenseiten-Ende-Abschnitts keinesfalls einen Kondensflüssigkeitsaustritt ermöglicht.

Die in den Figuren gleichen Bezugsziffern bezeichnen gleiche oder gleich wirkende Elemente.

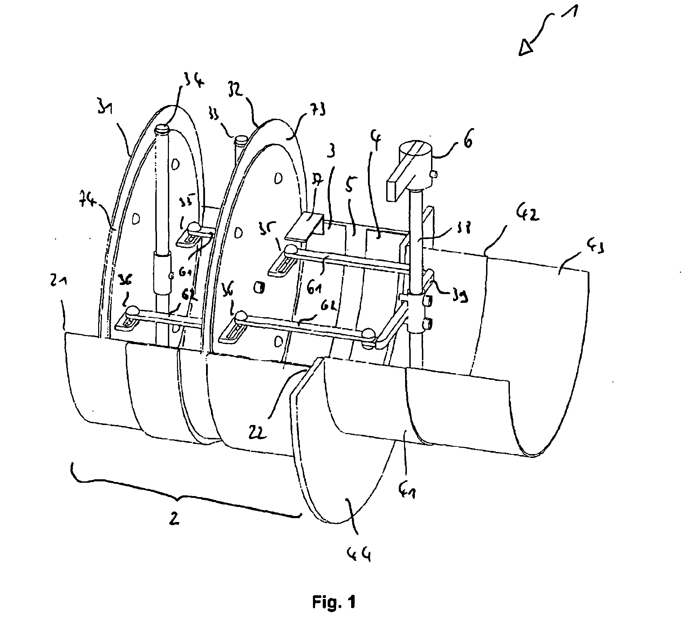

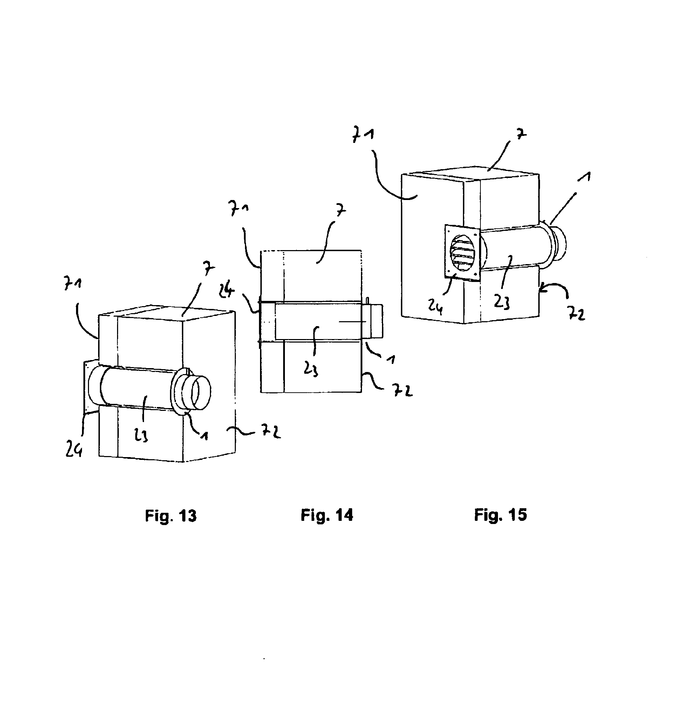

In Fig. 1 ist eine erfindungsgemäße Zuluft-Wanddurchführung 1, mit einem Kanal 2 mit einem Außenseiten-Ende 21 und einem Innenseiten-Ende 22 zum Einbau in einer zu durchführenden Wand (nicht dargestellt, siehe Fig. 13 ff) gezeigt. Der Kanal 2 ist durch einen Innenseiten-Ende-Abschnitt 4, einen Mittel-Abschnitt 5 und teilweise durch einen Außenseiten-Ende-Abschnitt 3 der Zuluft-Wanddurchführung gebildet. Der Mittel-Abschnitt 5, im Beispiel ist dieser aus Kunststoff die angrenzenden Teile aus Metall, bewirkt eine thermische Entkopplung des Außenseiten-Ende-Abschnitts 3 und des Innenseiten-Ende-Abschnitts 4.

Zur Abdichtung ist im Außenseiten-Ende-Abschnitt 3 zwei gekoppelte Klappen 31 und 32 im Zuluft-Weg hintereinander angeordnet vorgesehen, vermittels welcher der Kanal 2 für die Zuluft verschlossen werden kann.

Die Klappen 31 und 32 sind kreisförmig ausgestaltet und an einer an dem Außenseiten-Ende-Abschnitt 3 des Kanals gelagerten Schwenkachse 33, 34 verschwenkbar.

An ihrem der Wand des Kanals zugewandeten Ende haben die Klappen 31 und 32 eine elastische Dichtung 73 und 74 angeformt.

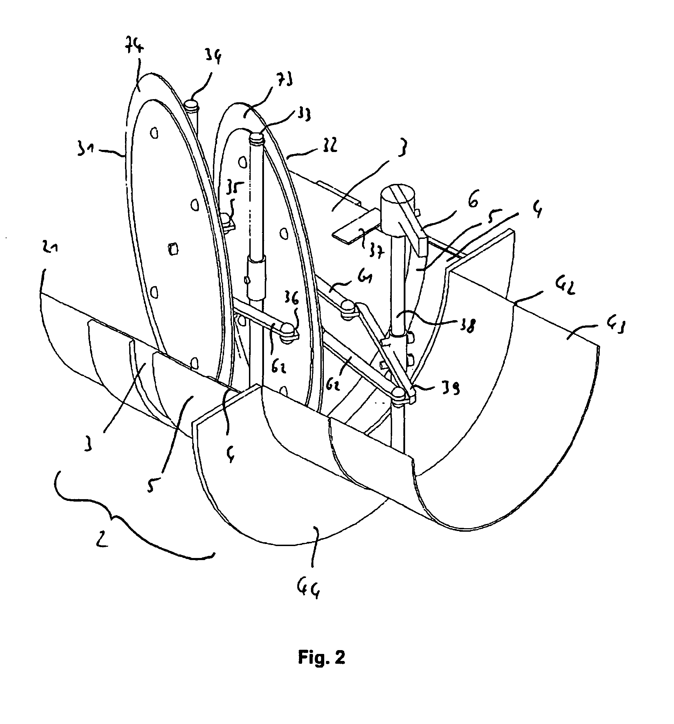

In Fig. 1 ist der Zustand mit geschlossenen Klappen gezeigt in Fig. 2 mit geöffneten Klappen.

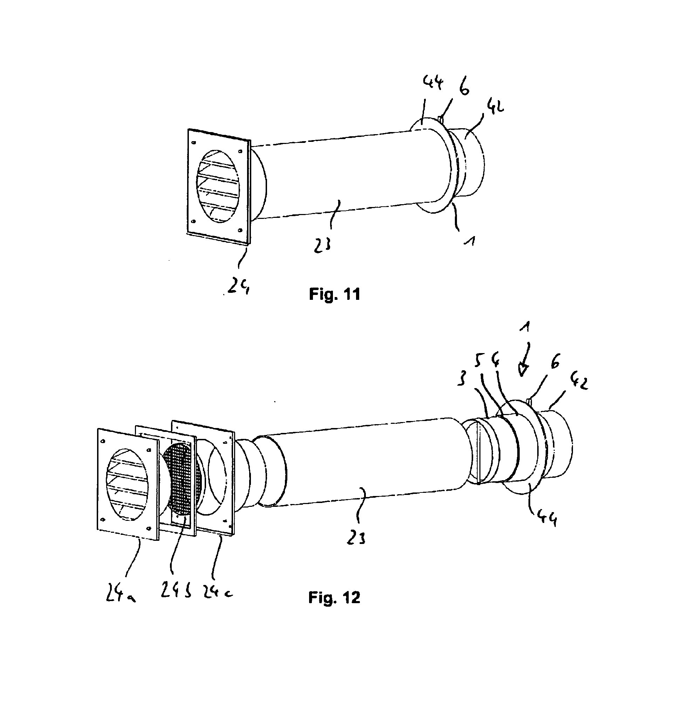

Zur Betätigung der Klappen 31 und 32 ist im Innenseiten-Ende-Abschnitt 4 eine Betätigungsvorrichtung 6 angeordnet, durch die Außenseite 41 des Rohr-Ansatzstücks 42 hindurchragt (siehe Fig. 11 ff), wobei die Betätigungsvorrichtung 6 mit der/n Klappe/n (31, 32) oder Lamelle/n mechanisch gekoppelt ist. Die mechanische Kopplung erfolgt durch ein hierzu vorgesehenes durch den Mittel-Abschnitt 5 reichendes Gestänge 61 und 62, das durch die Betätigungsvorrichtung 6 und dessen Achse 38 auf die Gestängesteuerung 39 und auf das symmetrisch ausgebildete Gestänge 61, 62 wirkt. Das Gestänge 61, 62 wiederum setzt an zwei beabstandet zur Schwenkachse 33, 34 der Klappen 31, 32 an der Klappe befindlichen Punkten 35, 36 an und verkippt diese um deren Schwenkachse 33, 34.

Für die Klappen ist ein einfacher Anschlag 37 vorgesehen, der an der Kanalwand befestigt ist.

Innenseitig endet der Kanal an einer Anschlagplatte 44, die mit der Innenseite der Wand abschließt. Daran anschließend folgt ein Rohr-Ansatzstück 42, der über den einzumauernden Teil des Innenseiten-Ende-Abschnitts 4 zum Anschluss eines Zuluft-Ofenrohres hinausragt.

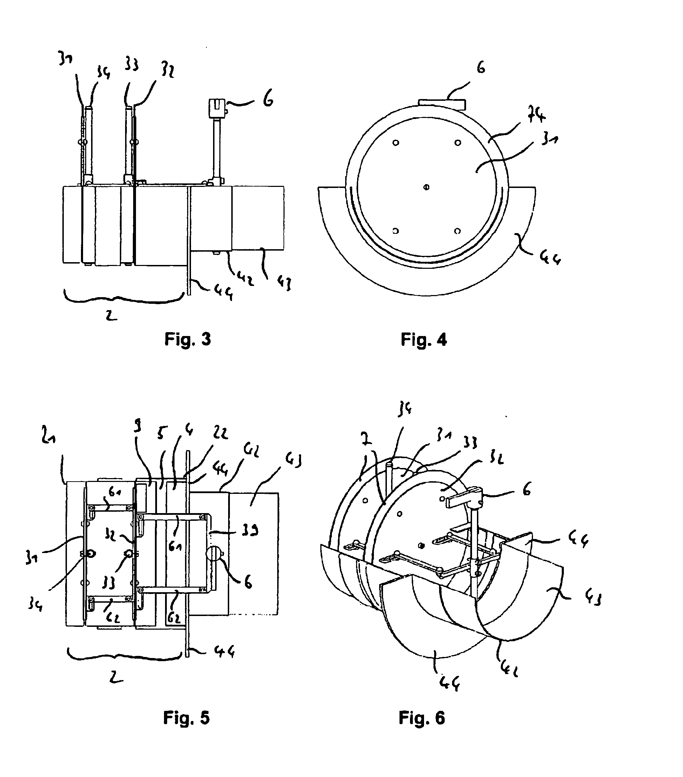

Die Fig. 3 bis 6 zeigen die Darstellung nach Fig. 1 aus unterschiedlichen Blickwinkeln.

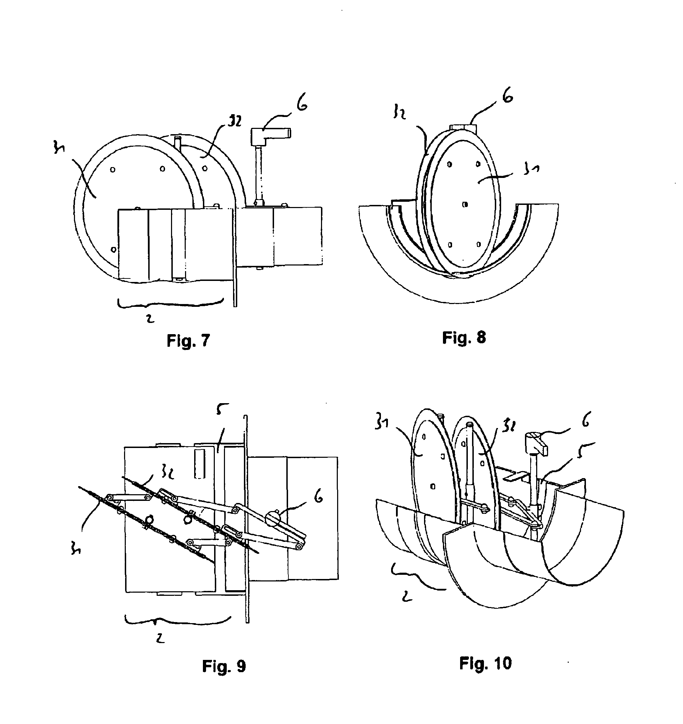

Dem entsprechend zeigen die Fig. 7 bis 10 die Darstellung nach Fig. 2 aus unterschiedlichen Blickwinkeln.

In den Fig. 11 und 12 ist die erfindungsgemäße Zuluft-Wanddurchführung 1 mit einer den Kanal 2 verlängernden Kanalverlängerung 23 mit sich daran anschließendem Gitteraufsatz gezeigt. Durch den Gitteraufsatz 24 die Außenluft an gesaugt.

In Fig. 12 ist noch die Anordnung nach Fig. 11 in teilen gezeigt. Der Gitteraufsatz 24 ist zerlegt in den Teilen Frontgitter 24a, Feingitter 24b und Blende 24c dargestellt.

Die Fig. 13 bis 15 zeigen die erfindungsgemäße Zuluft-Wanddurchführung 1 mit Kanalverlängerung 23 und Gitteraufsatz 24 im eingebauten Zustand in einer Wand 7 in schematischen Schnittdarstellungen in drei verschiedenen Ansichten.

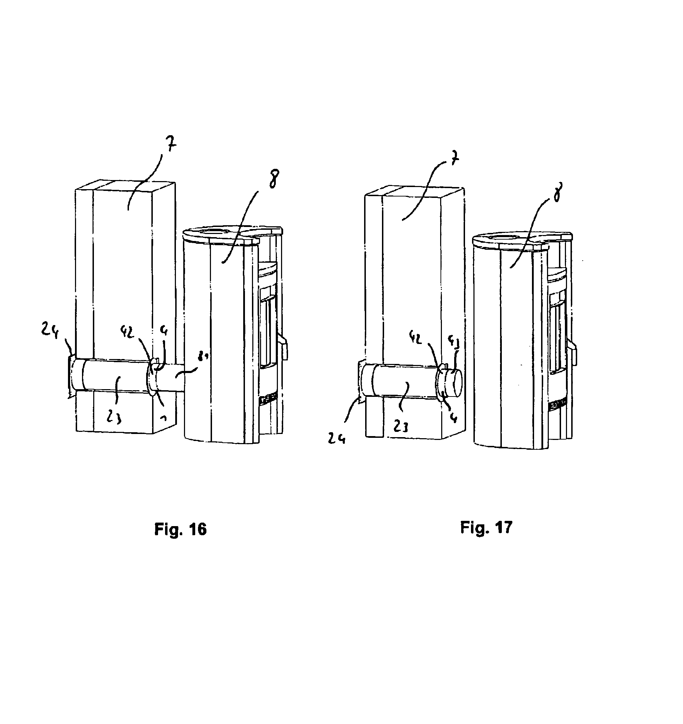

Die Fig. 16 und 17 zeigen die Zuluft-Wanddurchführung 1 mit an dem Aufschiebestück 43 (siehe auch beispielsweise Fig. 1, 2, 11) des Rohr-Ansatzstücks 42 angeschlossenen Zuluft-Ofenrohr 81, das mit einem Kaminofen 8 verbunden ist. Zur Verdeutlichung iss das Zuluft-Ofenrohr in Fig. 17 weggelassen.

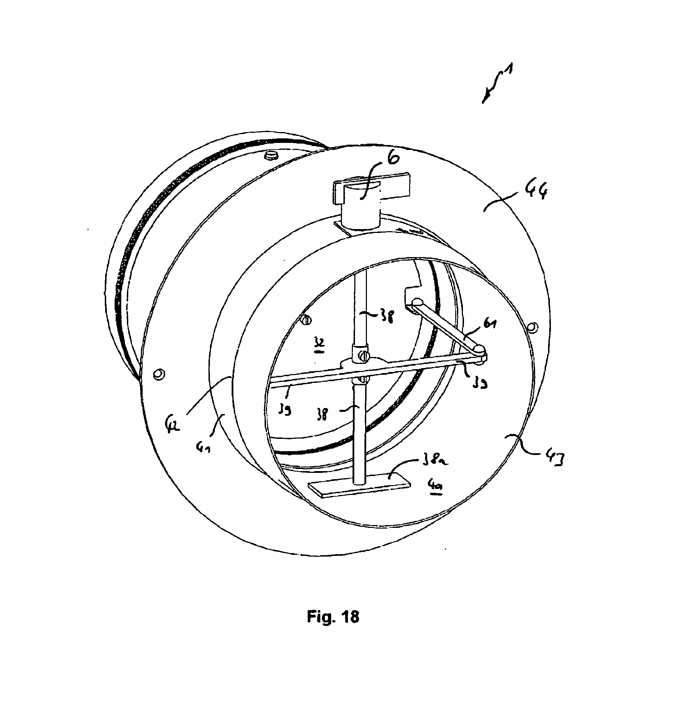

Die Fig. 18 zeigt schließlich eine Variante der Lagerung der mit dem durch den Kanal zu den - im Beispiel geschlossenen - Klappen (nur 32 sichtbar) reichenden Gestänge 61, 62 verbundenen Achse 38, an dem im gezeigten Beispiel die Betätigungsvorrichtung 6 verbunden ist, wobei die Achse 38 in einer auf der Wandung 4a des Innenseiten-Ende-Abschnitts 4 (bzw. dessen Rohr-Ansatzstücks 42) des Kanals 2 aufgesetzten Achslagerung 38a gelagert ist, sodass die Wandung 4a des unteren Bereichs Innenseiten-Ende-Abschnitts 4 keinesfalls einen Kondensflüssigkeitsaustritt in ein Rauminneres ermöglicht.

### Bezugszeichenliste

- 1: Zuluft-Wanddurchführung
- 2: Kanal
- 21: Außenseiten-Ende
- 22: Innenseiten-Ende
- 23: Kanalverlängerung
- 24: Gitteraufsatz
- 24a: Frontgitter
- 24b: Feingitter
- 24c: Blende

- 3: Außenseiten-Ende-Abschnitt
- 31, 32: Klappe
- 33, 34: Schwenkachse
- 35, 36: Ansatz-Punkt
- 37: Anschlag
- 38: Achse
- 38a: Achslagerung
- 39: Gestängesteuerung

- 4: Innenseiten-Ende-Abschnitt
- 4a: Wandung, Innenseite
- 41: Außenseite
- 42: Rohr-Ansatzstück
- 43: Aufschiebestück
- 44: Anschlagplatte

- 5: Mittel-Abschnitt

- 6: Betätigungsvorrichtung
- 61, 62: Gestänge
- 7: Wand
- 71: Außenseite
- 72: Innenseite

- 8: Kaminofen
- 81: Zuluft-Ofenrohr

## Patentansprüche

1. Zuluft-Wanddurchführung (1), mit einem Kanal (2) mit einem Außenseiten-Ende (21) und einem Innenseiten-Ende (22) zum Einbau in einer zu durchführenden Wand (7) mit einer Außenseite (71) und einer Innenseite (72),
wobei der Kanal (2) wenigstens teilweise durch einen Innenseiten-Ende-Abschnitt (4), einen Mittel-Abschnitt (5) und einen Außenseiten-Ende-Abschnitt (3) der Zuluft-Wanddurchführung gebildet ist, **dadurch gekennzeichnet,**
**dass** im Außenseiten-Ende-Abschnitt (3) wenigstens eine Klappe (31, 32) oder Lamelle vorgesehen ist, vermittels welcher der Kanal (2) für die Zuluft verschlossen werden kann, und dass im und/oder am Innenseiten-Ende-Abschnitt (4) die wenigstens eine Klappe oder Lamelle betätigende Betätigungsvorrichtung (6) angeordnet ist,
wobei die Betätigungsvorrichtung (6) mit der/n Klappe/n (31, 32) oder Lamelle/n innerhalb des Kanals (2) mechanisch gekoppelt ist,
wobei der Mittel-Abschnitt (5) eine thermische Entkopplung des Außenseiten-Ende-Abschnitts (3) und des Innenseiten-Ende-Abschnitts (4) bewirkt,

2. Zuluft-Wanddurchführung nach Anspruch 1,
**dadurch gekennzeichnet,**
**dass** die mechanische Kopplung durch ein hierzu innerhalb des Kanals (2) vorgesehenes durch den Mittel-Abschnitt (5) reichendes Gestänge (61, 62) erfolgt.

3. Zuluft-Wanddurchführung nach Anspruch 1 oder 2,
**dadurch gekennzeichnet,**
**dass** im Außenseiten-Ende-Abschnitt (3) zwei Klappen (31 und 32) im Zuluft-Weg hintereinander angeordnet vorgesehen sind.

4. Zuluft-Wanddurchführung nach einem der vorhergehenden Ansprüche,
**dadurch gekennzeichnet,**
**dass** die zwei Klappen (31 und 32) miteinander mechanisch parallel gekoppelt sind.

5. Zuluft-Wanddurchführung nach einem der vorhergehenden Ansprüche,
**dadurch gekennzeichnet,**
**dass** der Mittel-Abschnitt (5) aus einem Material, insbesondere Kunststoff, hergestellt ist, das schlechter Wärme leitend ist, als die angrenzenden Materialien, aus denen die Außenseiten-Ende- (3) und Innenseiten-Ende-Abschnitte (4) hergestellt sind.

6. Zuluft-Wanddurchführung nach einem der vorhergehenden Ansprüche,
**dadurch gekennzeichnet,**
**dass** anschließend an den Kanal (2) bildenden Bereich des Innenseiten-Ende-Abschnitts (4) ein Rohr-Ansatzstück (42) vorgesehen ist, der über den einzumauernden Teil des Innenseiten-Ende-Abschnitts (4) hinausragt.

7. Zuluft-Wanddurchführung nach Anspruch 6,
**dadurch gekennzeichnet,**
**dass** die Betätigungsvorrichtung (6) durch die Außenseite (41) des Rohr-Ansatzstücks (42) hindurchragt.

8. Zuluft-Wanddurchführung nach einem der vorhergehenden Ansprüche,
**dadurch gekennzeichnet,**
**dass** die Klappe/n (31, 32) an einer an dem Außenseiten-Ende-Abschnitt (3) des Kanals gelagerten Schwenkachse (33, 34) verschwenkbar ist/sind.

9. Zuluft-Wanddurchführung nach Anspruch 8,
**dadurch gekennzeichnet,**
**dass** das Gestänge (61, 62) symmetrisch ausgebildet ist und an zwei beabstandet zur Schwenkachse (33, 34) der Klappen (31, 32) an der Klappe befindlichen Punkten (35, 36) ansetzt.

10. Zuluft-Wanddurchführung nach Anspruch 8 oder 9,
**dadurch gekennzeichnet,**
**dass** das Gestänge (61, 62) über eine im Kanal (2) angeordnete Achse (38) betätigt wird und die Achse (38) mit der Betätigungsvorrichtung (6) mechanisch gekoppelt ist.

11. Zuluft-Wanddurchführung nach Anspruch 10,
**dadurch gekennzeichnet,**
**dass** die Achse (38) wenigstens an einem Ende an der Innenseite der Wandung (4a) des Innenseiten-Ende-Abschnitts (4) über eine Achslagerung (38a) befestigt ist.

12. Zuluft-Wanddurchführung nach einem der vorhergehenden Ansprüche,
**dadurch gekennzeichnet,**
**dass** die Klappe/n an (31, 32) ihrer/m der Wand des Kanals zugewandeten Ende eine elastische Dichtung (73, 74) angeformt hat/haben oder daran befestigt aufweisen.

13. Zuluft-Wanddurchführung nach einem der vorhergehenden Ansprüche,
**dadurch gekennzeichnet,**
**dass** sich an den Außenseiten-Ende-Abschnitt (3) eine Kanalverlängerung (23) anschließt, die insbesondere mit einem Gitteraufsatz (24) abschließt.

## Claims

1. A feed air wall bushing (1), having a duct (2) with an outside end (21) and an inside end (22), for installation in a wall (7) through which the bushing is to pass and which has an outside (71) and an inside (72),
the duct (2) being formed at least partially by an inside end section (4), a central section (5) and an outside end section (3) of the feed air wall bushing,
**characterised in that**
at least one flap (31, 32) or slat is provided in the outside end section (3), by means of which flap or slat the duct (2) for the feed air can be closed,
and an actuation device (6) that actuates the at least one flap or slat is arranged in and/or on the inside end section (4),
wherein the actuation device (6) is mechanically coupled to the flap(s) (31, 32) or slat(s) inside the duct (2),
wherein the central section (5) effects thermal decoupling of the outside end section (3) from the inside end section (4).

2. The feed air wall bushing according to Claim 1,
**characterised in that**
the mechanical coupling is provided by a rod assembly (61, 62), which is provided for this purpose inside the duct (2) and extends through the central section (5).

3. The feed air wall bushing according to Claim 1 or 2,
**characterised in that**
two flaps (31 and 32) are provided arranged one behind the other in the feed air path in the outside end section (3).

4. The feed air wall bushing according to any one of the preceding claims,
**characterised in that**
the two flaps (31 and 32) are mechanically coupled to each other in parallel.

5. The feed air wall bushing according to any one of the preceding claims,
**characterised in that**
the central section (5) is produced from a material, in particular plastic, which conducts heat more poorly than the adjacent materials, from which the outside end section (3) and inside end section (4) are produced.

6. The feed air wall bushing according to any one of the preceding claims,
**characterised in that**
a pipe attachment piece (42) is provided adjoining the region of the inside end section (4) that forms the duct (2), which pipe attachment piece projects beyond the part of the inside end section (4) that is to be walled in.

7. The feed air wall bushing according to Claim 6,
**characterised in that**
the actuation device (6) projects through the outside (41) of the pipe attachment piece (42).

8. The feed air wall bushing according to any one of the preceding claims,
**characterised in that**
the flap(s) (31, 32) can be pivoted on a pivot axle (33, 34) that is mounted on the outside end section (3) of the duct.

9. The feed air wall bushing according to Claim 8,
**characterised in that**
the rod assembly (61, 62) has a symmetrical configuration and is attached at two points (35, 36), which are situated on the flap, at a distance from the pivot axle (33, 34) of the flaps (31, 32).

10. The feed air wall bushing according to Claim 8 or 9,
**characterised in that**
the rod assembly (61, 62) is actuated by means of an axle (38) arranged in the duct (2), and the axle (38) is mechanically coupled to the actuation device (6).

11. The feed air wall bushing according to Claim 10,
**characterised in that**
the axle (38) is fastened at least at one end to the inside of the wall (4a) of the inside end section (4) by means of an axle bearing (38a).

12. The feed air wall bushing according to any one of the preceding claims,
**characterised in that**
the flap(s) (31, 32) has/have an elastic seal (73, 74) moulded onto or fastened to the end thereof that faces the wall of the duct.

13. The feed air wall bushing according to any one of the preceding claims,
**characterised in that**
a duct extension (23) adjoins the outside end section (3), which duct extension is terminated in particular with a grille attachment (24).

## Revendications

1. Traversée murale pour air entrant (1), avec un canal (2) comprenant une extrémité de côté extérieur (21) et une deuxième de côté intérieur (22) pour l'encastrement dans un mur (7) à traverser avec un côté extérieur (71) et un côté intérieur (72),
dans laquelle le canal (2) est au moins partiellement formé par une section d'extrémité de côté intérieur (4), une section centrale (5) et une section d'extrémité du côté extérieur (3) de la traversée murale pour air entrant,
**caractérisée en ce que**
dans la section d'extrémité du côté extérieur (3), il est prévu au moins un clapet (31, 32) ou une lamelle permettant de fermer le canal (2) pour l'air entrant,
et **en ce qu'**au moins un dispositif d'actionnement (6) actionnant l'au moins un clapet ou l'au moins une lamelle est agencé dans la section d'extrémité de côté intérieur (4),
le dispositif d'actionnement (6) étant accouplé mécaniquement au(x) clapet(s) (31, 32) ou à la/aux lamelle(s) à l'intérieur du canal (2),
la section centrale (5) provoquant un désaccouplement thermique de la section d'extrémité du côté extérieur (3) et de la section d'extrémité de côté intérieur (4).

2. Traversée murale pour air entrant selon la revendication 1,
**caractérisée en ce que**
l'accouplement mécanique est réalisé à l'aide d'une tringlerie (61, 62) s'étendant à travers la section centrale (5), prévue à cet effet à l'intérieur du canal (2).

3. Traversée murale pour air entrant selon la revendication 1 ou 2,
**caractérisée en ce que**
dans la section d'extrémité du côté extérieur (3), il est prévu deux clapets (31 et 32) agencés l'un à la suite de l'autre dans la trajectoire d'air entrant.

4. Traversée murale pour air entrant selon l'une des revendications précédentes,
**caractérisée en ce que**
les deux clapets (31 et 32) sont accouplés entre eux mécaniquement.

5. Traversée murale pour air entrant selon l'une des revendications précédentes,
**caractérisée en ce que**
la section centrale (5) est constituée d'un matériau, en particulier de plastique, moins conducteur de chaleur que les matériaux adjacents constituant la section d'extrémité du côté extérieur (3) et la section d'extrémité de côté intérieur (4).

6. Traversée murale pour air entrant selon l'une des revendications précédentes,
**caractérisée en ce que**
à la suite de la région de la section d'extrémité de côté intérieur (4) formant le canal (2), il est prévu une pièce de raccordement de tuyau (42) faisant saillie au-dessus de la partie de la section d'extrémité de côté intérieur (4) destinée à être encastrée dans un mur.

7. Traversée murale pour air entrant selon la revendication 6,
**caractérisée en ce que**
le dispositif d'actionnement (6) traverse le côté extérieur (41) de l'embout de tuyau (42).

8. Traversée murale pour air entrant selon l'une des revendications précédentes,
**caractérisée en ce que**
le(s) clapet(s) (31, 32) peut/peuvent pivoter sur un axe de pivotement (33, 34) monté sur la section d'extrémité du côté extérieur (3) du canal.

9. Traversée murale pour air entrant selon la revendication 8,
**caractérisée en ce que**
la tringlerie (61, 62) est conçue symétrique et commence en deux points (35, 36) situés sur le clapet, à distance de l'axe de pivotement (33, 34) des clapets (31, 32).

10. Traversée murale pour air entrant selon la revendication 8 ou 9,
**caractérisée en ce que**
la tringlerie (61, 62) est actionnée par le biais d'un axe (38) agencé dans le canal (2), et l'axe (38) est accouplé mécaniquement au dispositif d'actionnement (6).

11. Traversée murale pour air entrant selon la revendication 10,
**caractérisée en ce que**
au moins à une extrémité, l'axe (38) est fixé au côté intérieur de la paroi (4a) de la section d'extrémité de côté intérieur (4) à l'aide d'un palier d'axe (38a).

12. Traversée murale pour air entrant selon l'une des revendications précédentes,
**caractérisée en ce que**
à son/leur extrémité tournée vers la paroi du canal, le (s) clapet (s) (31, 32) présente (nt) un joint d'étanchéité élastique (73, 74) formé ou fixé sur celui-ci/ceux-ci.

13. Traversée murale pour air entrant selon l'une des revendications précédentes,
**caractérisée en ce que**
un prolongement de canal (23), se terminant en particulier par un embout à grille (24), est agencé à la suite de la section d'extrémité du côté extérieur (3).
